# EUROPEAN PATENT SPECIFICATION

(11) **EP 0 880 252 B1**
(45) Date of publication and mention of the grant of the patent: **02.11.2006**
(21) Application number: 97201551.5
(22) Date of filing: 23.05.1997
(51) Int. Cl.: H04L 12/58, H04N 7/088

(54) **Electronic mail system**
Elektronisches Mitteilungssystem
Système de courrier électronique

(43) Date of publication of application: 25.11.1998
(73) Proprietor: Koninklijke KPN N.V., 9726 AE Groningen (NL)
(72) Inventor: Boot, Adriaan Johan, 2264 XZ Leidschendam (NL)

(56) References cited:
- EP-A- 0 396 186
- EP-A- 0 630 156
- EP-A- 0 723 369
- NL-C- 1 004 167
- US-A- 5 557 659
- CHAMBERS J P: "BBC DATACAST - THE TRANSMISSION SYSTEM" ELECTRONICS & WIRELESS WORLD, vol. 92, no. 1609, pages 95-98, XP002019797
- WILKINSON C F: "X.400 ELECTRONIC MAIL" ELECTRONICS AND COMMUNICATION ENGINEERING JOURNAL, vol. 3, no. 3, pages 129-136, XP000235795

## Description

### Background of the invention

The present invention relates to an electronic mail (E-mail) system comprising electronic mailboxes for receiving electronic messages. Such an electronic mail system is generally known. In electronic mail systems the system operator allocates mailboxes to the subscribers of the system. Each mailbox has an electronic mail address. The subscribers are able to exchange electronic messages with each other via the mailboxes, using electronic mail addresses to indicate to which mailbox messages are to be directed. In order to send and receive messages, the subscribers of the system need to be in the possession of a computer with appropriate software and, if the connection to the mail system is made by the computer via the public telephone network, also a modem. In known electronic mail systems, a subscriber is only able to read the messages from his mailbox, making use of such appropriate computer equipment. This has the drawback, that when the subscriber is at a place, where he does not have access to such computer equipment, e.g. during a business trip, he is unable to read the messages stored in his mailbox. This may lead thereto, that urgent or important messages may remain unnoticed to the subscriber, while he is absent.

### Summary of the invention

It is an object of the present invention to provide an electronic mail system, in which the subscribers have access to messages stored in their mailboxes, even when they find themselves at places, where they do not have computer equipment at their disposal. Furthermore it is an object of the present invention to give subscribers, who do not have a computer at all, access to the electronic mail system. Thereto the electronic mail system according to the present invention is characterized in that, it further comprises
- request handling means for handling a request of a subscriber for reading out at least an electronic message present in an electronic mailbox belonging to the subscriber, which request handling means can be contacted by the subscriber, and which request handling means are designed for sending to read-out means an instruction command for reading out the electronic messages from the electronic mailbox, if the request is accepted,
- the read-out means, being designed for reading out the electronic message from the electronic mailbox and transmitting the electronic message to message insertion means, upon reception of the instruction command, and
- the message insertion means being designed for inserting the electronic message into a TV-signal, according to a teletext standard.

So, in the electronic mail system according to the present invention, the messages from a subscriber's mailbox may be read, using any TV-receiver having a teletext decoder. This means, that the electronic mail system according to the present invention enables subscribers to get access to their mail box messages from any place, where such a TV-receiver with teletext decoder is present, for example the hotel room, where the subscriber is staying during a business trip. The electronic mail system according to the present invention furthermore gives access to subscribers, who do not have computer equipment at all, such as elderly people, by using their television sets at home. The request handling means may, for example, be made up by a value added telephone service, which can be contacted using any telephone set. By calling this value added telephone service, a subscriber is able to request, that the message or messages present in his mailbox is or are sent to teletext.

An embodiment of the electronic mail system according to the present invention is characterized in that, the request handling means are designed for communicating data concerning a TV-channel and a teletext page on which the electronic message is present to the requesting subscriber. In this way the requesting subscriber knows exactly on which TV-channel and on which teletext page he has to look for the message from his mailbox.

A further embodiment of the electronic mail system according to the present invention is characterized in that, the request handling means comprise storage means for storing personal identification numbers belonging to electronic mailboxes and comparing means for comparing a personal identification number inserted by the subscriber requesting reading out the electronic message from the electronic mailbox with the stored personal identification number belonging to that electronic mailbox, the request handling means being designed for sending the instruction command to the read-out means for reading out the electronic message, only if these two personal identification numbers are equal. In this way it is achieved, that only the subscriber to a mailbox himself is able to request that the message present in that mailbox is sent to teletext, while it is avoided, that other persons can do this.

A still further embodiment of the electronic mail system according to the invention is characterized in that, the request handling means are designed for handling a subscriber's request for sending an electronic message to an electronic mailbox, the request handling means being designed for transmitting the electronic message to the message insertion means, the message insertion means being designed for inserting the electronic message into a TV-signal, according to a teletext standard, and the request handling means further being designed for sending the electronic message to the electronic mailbox, when an approval is received from the requesting subscriber. With the electronic mail system according to this embodiment, subscribers are also able to send electronic messages to mailboxes, without using computer equipment. The message to be sent is shown on teletext in order to be checked by the subscriber. The request handling means send the electronic message to the requested mailbox, when the subscriber's approval thereof is received.

The present invention also relates to a method of reading out an electronic message present in an electronic mailbox of an electronic mail system. The method according to the present invention is characterized by the following steps:
- receiving a subscriber's request using a telephone set for reading out the electronic message by request handling means,
- the transmission by the request handling means of an instruction command for reading out the electronic message to read-out means, if the request is accepted,
- upon reception of the instruction command by the read-out means, reading out the message and transmitting it to message insertion means, and
- the insertion of the message into a TV-signal according to a teletext standard by the message insertion means.
   European patent application 0 396 186 of the applicant discloses a teletext system, which is coupled to a public electronic mail system. A message may be directed to teletext in an easy way, by sending it to a dedicated mailbox of the public electronic mail system. It is however, not possible for a subscriber of the electronic mail system to request the sending of the messages present in his mailbox to teletext, as in the system of the present invention.
   Netherlands's patent 1004167 of the applicant discloses an electronic mail system in which a subscriber is notified for example by telephone, when a message has arrived for him. The notification is sent to a predetermined terminal, such as the subscriber's home telephone set or fax. Upon this notification, the subscriber can get access to the message by using a second terminal, such as a personal computer or a TV-set having teletext. Netherlands's patent 1004167, however, does not disclose, request handling means, which can be contacted by the subscriber on his own initiative, by using any available telephone set, as in the system according to the present invention.
   European patent application 0 723 369 discloses in a very general way a method of transforming the Internet World Wide Web protocol into teletext information. This has a result, that Internet information can be shown via teletext. This document, however, does not disclose technical means making it possible for a subscriber to request the sending of messages present in his mailbox to teletext.

### References

- EP 0 396 186
- EP 0 723 369
- NL 1004167
- Chambers, J.P.
   BBC Datacast
   EBU Rev. Tech. (Belgium), no. 222, pages 80-89, April 1987

### Brief description of the drawings

The invention will be further explained with reference to the accompanying drawing, in which
figure 1 shows an electronic mail system according to the present invention, and
figure 2 shows the request handling means thereof in more detail.

### Exemplary embodiments

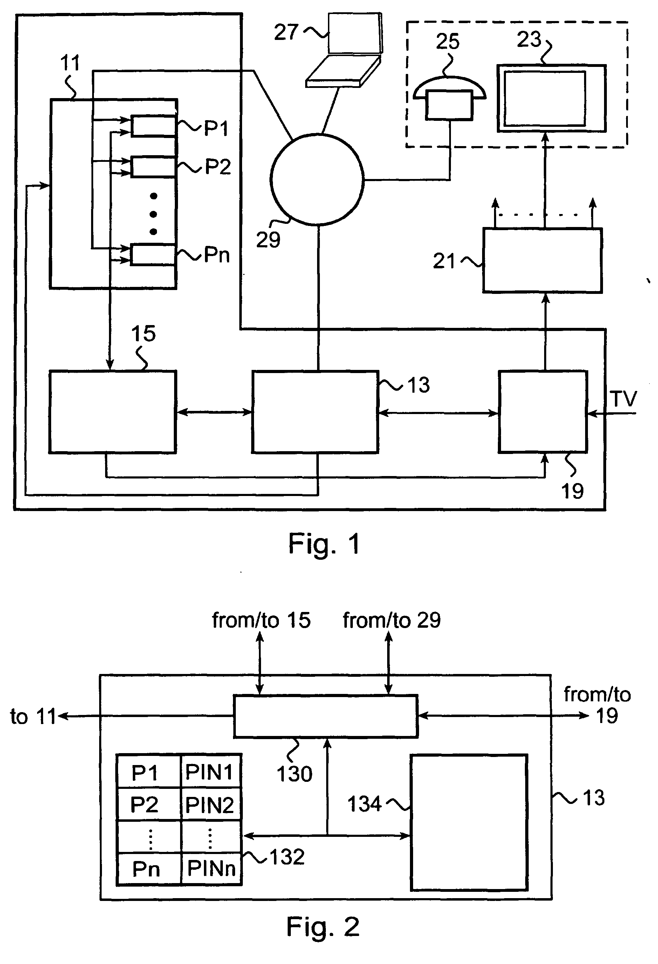

In figure 1 an electronic mail system 1 according to the present invention is shown. It comprises a mail server 11, comprising a number of mailboxes P1,P2,..,Pn belonging to subscribers to the system. The mail server 11 is not further described here, because it is generally known prior art. The electronic mail system 1 further comprises request handling means 13, read-out means 15 and message insertion means 19. The message insertion means 19 are equipped for inserting messages into information free zones of a TV-signal TV according to a teletext standard such as the CCIR Teletext standard B. The message insertion means 19 are coupled to TV-signal broadcasting means 21, for broadcasting the TV-signal to a great number of television receivers 23 (only one of them is shown). The mail server 11 is connected to the Public Switched Telephony Network (PSTN) 29. To the PSTN 29 in a known way telephone sets 25 (only one shown) and computers 27 (only one shown) can be coupled. Furthermore the request handling means 13 are coupled to the PSTN 29.

Let us assume, that the user of computer 27 is a subscriber to the electronic mail system 1, having mailbox P1. The user of computer 27 can send messages to other subscribers of the electronic mail system and also read messages received by his mailbox P1, using his computer 27 with appropriate software, setting up a communication with the mail server 11. No further description of the exchange of electronic messages is given, here, because this is well known prior art. Let us assume now, that the subscriber is at a business trip or on holidays and finds himself in a hotel room (indicated by the dashed line) having a telephone set 25 and a television receiver with a teletext decoder 23. In order to read the electronic messages present in his mailbox P1, he calls the request handling means 13 using telephone set 25. It is, by the way, possible to call the request handling means 13 from every telephone set connected to the PSTN 29. The request handling means preferably are formed by a value added telephone service. They are shown in more detail in figure 2. The request handling means comprise a call handler 130, storage means 132 for storing Personal Identification Numbers (PINs) of subscribers of mail boxes and comparator means 134. The call handler 130 is designed for handling incoming calls. The call handler 130 is for example a voice response system, which directs questions to the requesting subscriber about his wishes, using recorded voice messages. The requesting user answers the questions, using the Dual Tone Multiple Frequency (DTMF)-buttons of his telephone. This technique is not described in more detail here, because it is widely known prior art. Amongst the questions to be answered by the requesting user are at least the question, which one his mailbox is, and the question what his Personal Identification Number (PIN) is. The request handling means check, if the given PIN is the same as the one stored in the storage means 132 in conjunction to the mailbox in question, in the present example mailbox P1, using comparator 134. If this is the case, an instruction command is sent to the read-out means 15 to read the messages from mailbox P1. The read-out means keep up as the subscriber of any of the mailboxes of mail server 11. They are made up by a small computer device with communication facilities and loaded with appropriate software. The read-out means 15 transmit the messages read from mailbox P1 to the message insertion means 19. In figure 1 the read-out means 15 and the message insertion means 19 are shown to have a direct connection. It is, however, also possible that the read-out means send the messages to the message insertion means 19 using the Public Switched Telephony Network 29. The message insertion means 19 are equipped for inserting the messages into a TV-signal, at places where there is no picture or sound information present in confirmation with a teletext standard, such as CCIR Teletext standard B. The message insertion means 19 may form part of a plurality of other electronic mail systems according to the present invention (not shown). The TV-signal broadcasting means 21 are designed for broadcasting the TV-signal to a great number of TV-receivers 23. The TV-signal broadcasting means 21 may be of any suitable type. The message insertion means 19 may be coupled by data lines to various other sources of teletext messages. A more detailed description of a teletext system is found in the article "BBC Datacast" of J.P. Chambers, EBU Rev. Tech. (Belgium), no. 222, pages 80-89, April 1987.

So, by inserting data indicative of his mailbox P1 and his Personal Identification Number the subscriber of mailbox P1 can read the messages in his mailbox, using his TV-receiver 23. The Personal Identification Number can for example be communicated to the subscriber of the mailbox by normal mail, after his subscription to the electronic mail system.

In the same way, subscribers of the other mailboxes P2..Pn may request, that the messages in their mailboxes are sent to teletext. The request can be made by using any available telephone set and the messages can be read using any available TV-receiver.

Alternatively, the request handling means may be designed to handle requests from subscribers to send the messages present in their mailbox to teletext at a predetermined time in the future. This enables subscribers to direct their request to the request handling means before travelling, in this way avoiding the use of expensive hotel telephones.

Furthermore, the call handler 130 may be designed to send an instruction command to the read-out means to read the titles and the senders of the messages present in the mailbox, after that the Personal Identification Number of the requesting subscriber has been checked and approved. The read out means 15 return these data to the call handler 130. The call handler comprises an automatic speech generator to translate these data into speech, which is directed to the requesting subscriber via the telephone network 29. By using DTMF-buttons on the telephone set 25, the subscriber may select which messages he wishes to be shown on teletext. The call handler 130 communicates the subscriber's choice to the read-out means 15, which as already described here above read the messages from the mailbox and send them to the message insertion means 19, in order to be sent to teletext. In this way it is avoided, that classified messages possibly present in the mailbox of the requesting subscriber, are shown on teletext and read by other persons in the possession of a TV-receiver with teletext decoder. Alternatively, the read out means 15 may be designed to read out only the titles and the senders of all the messages present in the mailbox, which titles and senders are inserted into the TV-signal by the message insertion means 19. The subscriber then sees the titles and senders on teletext and is enabled select messages, that he wants to see, using the buttons of his telephone set. After having read the messages, the user is enabled to delete them, again using the buttons of his telephone set.

Furthermore the request handling means 13, preferably are designed to communicate the TV-channel and the teletext page at which the messages are present to the requesting subscriber. Thereto the message insertion means 19 are designed to communicate this information to the request handling means 13.

Finally, the request handling means 13 may also be designed to handle requests from subscribers to send electronic messages to other mailboxes, when they do not have access to their computers 27. This can be done in the following way: A subscriber calls the request handling means 13 using a telephone set 25. He indicates that he wants to send a electronic mail message, for example, using the DTMF-buttons of his telephone set 25. He also has to type in data relating to his mailbox and his PIN. The call handler 130 then sends a request to the message insertion means 19 for appointing an empty teletext page to the requesting subscriber. The number of this page is communicated to the call handler 130, which at its turn communicates this page number to the requesting subscriber. Then the requesting subscriber has to type in the message to be sent. This may be done using the DTMF-buttons of the telephone, using an appropriate protocol, for example pushing button number 1 once means 1, pushing button number 1 twice means A, pushing button number 1 three times means B, pushing button number 1 four times means C, pushing button number 2 once means 2, pushing button number 2 twice means D etc. The request handling means 13 send the characters typed in by the requesting user to the message insertion means 19, which direct these characters to the appointed teletext page. By watching this teletext page, using the TV-receiver 23 with teletext decoder, the subscriber, sees the message that he is typing. As soon as the message is ready, the subscriber must approve the sending thereof. This may be done using for example the button * of his telephone set. The request handling means 13 then direct the message to the right mailbox.

Alternatively, the subscriber, calling the request handling means 13, may be connected to a typist for dictating the message to be sent. The typist types the message, which at the same time is sent to a teletext page for inspection by the subscriber. The subscriber then approves the message verbally, and the message is sent to the right mailbox. Furthermore it is possible to use a voice recognition system, which recognizes a spoken message of the requesting subscriber and convert it into a written message to be sent to teletext. This enables the subscriber to send a message in a very easy way.

Of course the electronic mail system according to the present invention may also be used by people, who do not have a personal computer at all, for example elderly people.

## Claims

1. Electronic mail system (1) comprising electronic mailboxes (P1..Pn) for receiving electronic messages and a request handling means (13) for handling a request of a subscriber for reading out at least one electronic message present in an electronic mailbox belonging to the subscriber, **characterised in that**,
- the request handling means is designed to receive the request of the subscriber sent using a telephone set,
- the request handling means (13) is designed to send to a read-out means (15) an instruction command for reading out the at least one electronic message from the electronic mailbox, if the request is accepted,
- the read-out means (15), is designed to read out the at least one electronic message from the electronic mailbox and to transmit the at least one electronic message to a message insertion means (19), upon reception of the instruction command, and
- the message insertion means (19) is designed to insert the at least one electronic message into a TV-signal (TV), according to a teletext standard.

2. Electronic mail system (1) according to claim 1, **characterized in that**, the request handling means (13) is designed to communicate data concerning a TV-channel and a teletext page on which the electronic message is present to the requesting subscriber.

3. Electronic mail system (1) according to one of the claims 1 or 2, **characterized in that**, the request handling means (13) comprises storage means (132) for storing personal identification numbers (PIN1..PINn) belonging to electronic mailboxes (P1..Pn) and comparing means (134) for comparing a personal identification number inserted by the subscriber requesting reading out an electronic message from an electronic mailbox with the stored personal identification number belonging to that electronic mailbox, the request handling means (13) is also designed to send the instruction command to the read-out means (15) for reading out the electronic message, only if these two personal identification numbers are equal.

4. Electronic mail system (1) according to one of the preceding claims, **characterized in that**, the request handling means (13) is designed to handle a subscriber's request for sending an electronic message to an electronic mailbox, the request handling means (13) is further designed to transmit the electronic message to the message insertion means (19), the message insertion means (19) is designed to insert the electronic message into a TV-signal (TV), according to a teletext standard, and the request handling means (13) is further designed to send the electronic message to the electronic mailbox, when an approval is received from the requesting subscriber.

5. Method of reading out an electronic message present in an electronic mailbox of an electronic mail system (1), **characterized by** the following steps:
- receiving a subscriber's request sent using a telephone
- set for reading out the electronic message by a request handling means (13),
- transmitting by the request handling means (13) an instruction command for reading out the electronic message to a read-out means (15), if the request is accepted,
- upon reception of the instruction command by the read-out means (15), reading out the electronic message and transmitting it to a message insertion means (19), and
- inserting the electronic message into a TV-signal (TV) according to a teletext standard by the message insertion means (19).

## Patentansprüche

1. Elektronisches Nachrichtensystem (1), umfassend elektronische Mailboxen (P1...Pn), um elektronische Nachrichten zu speichern, und ein Behandlungsaufforderungsmittel (13) zur Behandlung einer Anfrage eines Teilnehmers zum Auslesen von mindestens einer elektronischen Nachricht, die in einer elektronischen Mailbox vorhanden ist, die zu dem Teilnehmer gehört,
**dadurch gekennzeichnet, dass**
- das Behandlungsaufforderungs-Mittel ausgestaltet ist, um die Anfrage von einem Teilnehmer zu empfangen, der einen Telefonapparat einsetzt,
- das Behandlungsaufforderungs-Mittel (13) ausgestaltet ist, um einem Auslesemittel (15) einen Instruktionsbefehl zu senden, um die mindestens eine elektronische Nachricht aus der elektronischen Mailbox auszulesen, falls der Aufforderung stattgegeben wird,
- das Auslesemittel (15) ausgestaltet ist, die mindestens eine elektronische Nachricht aus der elektronischen Mailbox auszulesen und die mindestens eine elektronische Nachricht bei Empfang des Instruktionsbefehls an ein Nachrichten-Einfügungsmittel (19) zu übertragen, und
- das Nachrichten-Einfügungsmittel (19) ausgestaltet ist, um die mindestens eine elektronische Nachricht gemäss einem Teletext-Standard in ein Fernsehsignal (TV) einzufügen.

2. Elektronisches Nachrichtensystem (1) nach Anspruch 1, **dadurch gekennzeichnet, dass** das Behandlungsanforderungsmittel (13) so ausgestaltet ist, um Daten betreffend einen Fernsehkanal und eine Teletextseite, auf welcher die elektronische Nachricht für den anfordernden Teilnehmer sichtbar ist, zu kommunizieren.

3. Elektronisches Nachrichtensystem (1) nach einem der Ansprüche 1 oder 2, **dadurch gekennzeichnet, dass** das Behandlungsanforderungsmittel (13) Speichermittel (132), um persönliche Identifikationsnnummern (PIN1...PINn) zu speichern, die zu elektronischen Mailboxen (P1...Pn) gehören, und Vergleichsmittel (134) zum Vergleichen einer persönlichen Identifikationsnummer umfasst, die durch den Teilnehmer eingefügt wird, welcher eine elektronische Nachricht aus einer elektronischen Mailbox ausliest, mit der gespeicherten persönlichen Identifikationsnummer, die zu dieser elektronischen Mailbox gehört, wobei das Behandlungsanforderungsmittel (13) auch ausgestaltet ist, um den Instruktionsbefehl an die Auslesemittel (15) zu übermitteln, um die elektronische Nachricht auszulesen, nur, falls die zwei persönlichen Identifikationsnummeren gleich sind.

4. Elektronisches Nachrichtensystem (1) nach einem der vorstehenden Ansprüche, **dadurch gekennzeichnet, dass** das Behandlungsanforderungsmittel (13) ausgestaltet ist, um eine Anforderung eines Teilnehmers für das Senden einer elektronischen Nachricht an eine elektronische Mailbox zu behandeln, wobei das Behandlungsanforderungsmittel (13) weiter so ausgestaltet ist, um die elektronische Nachricht an das Nachrichten-Einfügungsmittel (19) zu übertragen, wobei das Nachrichten-Einfügungsmittel (19) ausgestaltet ist, um die elektronische Nachricht gemäss einem Teletext-Standard in ein Fernsehsignal (TV) einzufügen, und das Behandlungsanforderungsmittel (13) weiterhin so ausgestaltet ist, um die elektronische Nachricht an die elektronische Mailbox zu übermitteln, wenn eine Zustimmung von dem anfordernden Teilnehmer empfangen worden ist.

5. Verfahren zum Auslesen einer elektronischen Nachricht, die in einer elektronischen Mailbox eines elektronischen Nachrichtensystems (1) vorhanden ist, **gekennzeichnet durch** die folgenden Schritte:
- Empfangen einer gesendeten Teilnehmer-Anforderung unter Einsatz eines Telefonapparates zum Auslesen der elektronischen Nachricht **durch** ein Behandlungsanforderungsmittel (13),
- Übertragen eines Instruktionsbefehls zum Auslesen der elektronischen Nachricht an ein Auslesemittel (15) **durch** die Behandlungsanforderungsmittel, falls die Anforderung akzeptiert wird,
- bei Empfang des Instruktionsbefehls **durch** die Auslesemittel (15), Auslesen der elektronischen Nachricht und Übertragen derselben an ein Nachrichten-Einfügungsmittel (19), und
- Einfügen der Nachricht in ein Fernsehsignal (TV) gemäss einem Teletext-Standard **durch** das Nachrichten-Einfügungsmittel (19).

## Revendications

1. Système de courrier électronique (1) comprenant des boîtes aux lettres électroniquess (P1 ... Pn) destinées à recevoir des messages électroniques et un moyen de gestion de demande (13) destiné à gérer une demande d'un abonné de lire au moins un message électronique présent dans une boîte aux lettres électronique appartenant à l'abonné, **caractérisé en ce que**
le moyen de gestion de demande est conçu pour recevoir la demande de l'abonné envoyée en utilisant un poste de téléphone,
le moyen de gestion de demande (13) est conçu pour envoyer à un moyen de lecture (15) un ordre d'instruction pour lire le au moins un message électronique à partir de la boîte aux lettres électronique, si la demande est acceptée,
le moyen de lecture (15) est conçu pour lire le au moins un message électronique à partir de la boîte aux lettres électronique et pour transmettre le au moins un message électronique à un moyen d'insertion de message (19), à la réception de l'ordre d'instruction, et
le moyen d'insertion de message (19) est conçu pour insérer le au moins un message électronique dans un signal de télévision (TV) conformément à une norme de télétexte.

2. Système de courrier électronique (1) selon la revendication 1 **caractérisé en ce que** le moyen de gestion de demande (13) est conçu pour communiquer des données concernant un canal de télévision et une page de télétexte sur lesquels le message électronique est présent à l'abonné demandeur.

3. Système de courrier électronique (1) selon l'une des revendications 1 ou 2, **caractérisé en ce que** le moyen de gestion de demande (13) comprend un moyen de mémorisation (132) destiné à mémoriser des numéros d'identification personnels (PIN1 ... PINn) appartenant à des boîtes aux lettres électroniquess (P1 ... Pn) et un moyen de comparaison (134) destiné à comparer un numéro d'identification personnel inséré par l'abonné demandant la lecture d'un message électronique provenant d'une boîte aux lettres électronique au numéro d'identification personnel mémorisé appartenant à cette boîte aux lettres électronique, le moyen de gestion de demande (13) est également conçu pour envoyer l'ordre d'instruction au moyen de lecture (15) destiné à lire le message électronique seulement si ces deux numéros d'identification personnels sont égaux.

4. Système de courrier électronique (1) conforme à l'une des revendications précédentes, **caractérisé en ce que** le moyen de gestion de demande (13) est conçu pour gérer une demande d'abonné d'envoyer un message électronique à une boîte aux lettres, le moyen de gestion de demande (13) est en outre conçu pour transmettre le message électronique au moyen d'insertion de message (19), le moyen d'insertion de message (19) est conçu pour insérer le message électronique dans un signal de télévision (TV) conformément à une norme de télétexte, et le moyen de gestion de demande (13) est en outre conçu pour envoyer le message électronique à la boîte aux lettres électronique, lorsqu'une approbation est reçue de l'abonné demandeur.

5. Procédé de lecture d'un message électronique présent dans une boîte aux lettres électronique d'un système de courrier électronique (1), **caractérisé par** les étapes suivantes consistant à :
- recevoir une demande d'abonné envoyée en utilisant un poste de téléphone de lire le message électronique par le biais d'un moyen de gestion de demande (13),
- transmettre, par le biais du moyen de gestion de demande (13), un ordre d'instruction de lire le message électronique à un moyen de lecture (15), si la demande est acceptée,
- à la réception de l'ordre d'instruction par le moyen de lecture (15), lire le message électronique et le transmettre à un moyen d'insertion de message (19), et
- insérer le message électronique dans un signal de télévision (TV) conformément à une norme de télétexte par le biais du moyen d'insertion de message (19).
